# EUROPÄISCHE PATENTSCHRIFT

(11) **EP 2 110 197 B1**
(45) Veröffentlichungstag und Bekanntmachung des Hinweises auf die Patenterteilung: **14.12.2016**
(21) Anmeldenummer: 09005413.1
(22) Anmeldetag: 16.04.2009
(51) Int. Cl.: B23K 11/087, B23K 11/25

(54) **Verfahren und Schweissvorrichtung zur Ermittlung der anzuwendenden Schweissstromstärke beim Behälterzargenschweissen**
Method and welding device for determining the welding electric current to be applied during welding of can bodies
Procédé et dispositif de soudage destiné à déterminer le courant de soudage pour des joints de corps de boîte

(30) Priorität: 17.04.2008 CH 6052008
(43) Veröffentlichungstag der Anmeldung: 21.10.2009
(73) Patentinhaber: Soudronic AG, 8962 Bergdietikon (CH)
(72) Erfinder: Ziegler, Patrick, 5621 Zufikon (CH)
(74) Vertreter: Schalch, Rainer

(56) Entgegenhaltungen:
- EP-A1- 0 761 368
- FR-A1- 2 696 369
- US-A- 5 237 147

## Beschreibung

### Hintergrund

Die Erfindung betrifft ein Verfahren zur Ermittlung des bei der Widerstandsnahtschweissung von Behälterzargen mit sich entlang der zu verschweissenden Naht ändernden Überlappung anzuwendenden Schweissstromes, ferner ein Verfahren zur Schweissung einer Produktionsserie von Behälterzargen mit dem derart ermittelten Schweissstrom, und eine Schweissvorrichtung für das Widerstandsnahtschweissen von Behälterzargen mit sich ändernder Überlappung.

### Stand der Technik

Für die Einstellung der Schweissstromstärke für das Widerstandsnahtschweissen von Behälterzargen ist es üblich, Probeschweissungen mit kleinen Zargenserien aus dem jeweiligen zu schweissenden Blechmaterial durchzuführen, wobei, wie in der Produktion, mit konstanter Schweissstromstärke des üblicherweise verwendeten Schweisswechselstroms gearbeitet wird. Die geschweissten Zargen einer solchen kleinen Serie werden dann durch mechanische Festigkeitskontrolle (z.B. Aufreissen der geschweissten Überlappnaht) und visuelle Kontrolle untersucht. Ist die Schweissstromstärke bei der Probeschweissung zu tief eingestellt gewesen, bzw. war die Schweisstemperatur zu tief, so geht die Naht leicht auf, da keine genügende Materialaufschmelzung erzielt worden ist, was auch als "Kleben" bezeichnet wird. Ist hingegen die Schweissstromstärke bei der Probeschweissung zu hoch eingestellt, so erfolgt die Schweissung mit zu hoher Temperatur und es entstehen im Schweissbereich Krater und flüssiges Zargen- oder Schweisselektrodenmaterial lagert sich als "Spritzer" entlang der Naht ab. Dies kann die Zarge für die weitere Verwendung unbrauchbar machen. Nach solchen Probeschweissungen, bei welchen von der Bedienungsperson in der Regel sowohl Testzargen mit "klebenden" Schweissnähten als auch Testzargen mit Schweissnähten mit Spritzern erzeugt werden, wird dann die Schweissstromstärke für die Serienproduktion von Zargen aus dieser Blechsorte festgelegt. Dabei wird die Schweissstromstärke im Bereich zwischen "Kleben" und "Spritzern" mit ca. 2/3 Abstand vom zu tiefen Wert und somit ca. 1/3 Abstand vom zu hohen Wert eingestellt. Bei diesem iterativen Vorgehen sind der Zeitaufwand und der Materialverbrauch durch die Probeserien stark von der Grösse des Schweissbereichs des Zargenmaterials und der Erfahrung der Bedienungsperson der Zargenschweissmaschine abhängig.

Für das Schweissen von Behälterzargen, deren Überlappung entlang der Zarge zu- oder abnimmt wird indes auch auf diese Weise nur schwerlich ein korrekter Schweissstrom ermittelbar sein. FR 2 696 369 A1 zeigt das Verschweissen der Bandenden von zwei Blechstreifen. US 5 237 147 A zeigt einen Schweissstromgenerator. EP 0 373 422 A1 zeigt eine Vorrichtung zur Überwachung der Schweissqualität und EP 0 761 368 A1 zeigt ein Schweissverfahren für Behälterzargen, bei welchem die Beschichtungsdicke des Blechs ermittelt und die Schweissstromquelle entsprechend gesteuert wird.

### Darstellung der Erfindung

Der Erfindung liegt die Aufgabe zu Grunde, das Schweissen von Behälterzargen mit entlang der Schweissnaht zu- oder abnehmender Überlappung auf einfache Weise und mit guter Schweissnahtqualität zu ermöglichen. Ferner liegt der Erfindung die Aufgabe zu Grunde, eine Schweissvorrichtung zur Durchführung des Verfahrens zu schaffen.

Gemäss der Erfindung nach Anspruch 9 wird bei der Schweissung von Produktionsserien von Behälterzargen mit elektrischem Widerstandsnahtschweissen bei Behälterzargen mit nicht gleichmässiger Überlappung so vorgegangen, dass in der Produktion bei jeder solchen Zarge eine entlang deren Naht fallende oder steigende Schweissstromstärke verwendet wird. Dies erlaubt die Schweissung in den Bereichen mit grosser Überlappung mit grösserer Stromstärke als in den Bereichen mit kleinerer Überlappung der Zargenränder, wo dann mit geringerer Stromstärke geschweisst wird. Die Bestimmung des dafür optimalen Schweissstromstärkeverlaufs erfolgt dabei mit dem nachstehend erläuterten Verfahren gemäss Anspruch 1. Dabei wird mit dem nachstehenden Verfahren (also mit fallender oder steigender Schweissstromstärke) auf zwei oder mehreren Zargen mit der unterschiedlichen Überlappung der optimale Stromstärkewert für die Schweissung im Bereich grosser und im Bereich geringer Überlappung bestimmt. Die Schweissstromstärke für die Produktion wird dann als in der Regel rampenförmiger Stromstärkeverlauf gewählt, der diese beiden Stromstärkewerte verbindet. Der Erfindung umfasst ferner auch eine für die Durchführung der Verfahren geeignete Schweissvorrichtungen gemäss Anspruch 10, bei der der Schweissstrom erst in einem vorbestimmten Abstand, z.B. 5 bis 10 Millimeter, vom Zargenanfang gestartet wird, damit allfällige Schwingungen der Schweissrollen oder Jittereffekte eine Messung der Schweissstromstärke entlang der Naht nicht verfälschen.

Die anzuwendende Schweissstromstärke wird dadurch ermittelt, dass mindestens eine Testzarge mit während der Schweissung fallender oder steigender Schweissstromstärke geschweisst wird, und dass bei der Schweissung erfasst wird, wo auf der Naht welche Schweissstromstärke wirksam geworden ist. Die Aufgabe wird ferner bei der Schweissvorrichtung der eingangs genannten Art mit den Merkmalen des Anspruchs 10 gelöst.

Die Testzarge weist somit eine Naht auf, die entlang ihrer Nahtlänge mit verschieden hoher Schweissstromstärke geschweisst worden ist. Ein ganzer Stromstärkebereich, welcher bevorzugt den Bereich vom "Kleben" bis zur Erzeugung von "Spritzern" umfasst, kann auf die Naht dieser einen Zarge "abgebildet" werden oder allenfalls auf zwei Zargen. Die mechanische und optische, insbesondere visuelle, Untersuchung dieser Zarge ergibt somit in der Regel entlang ihrer Naht einen Nahtbereich, der mit geeigneter Schweissstromstärke geschweisst worden ist. Ist dies nicht der Fall, so kann allenfalls eine zweite Testzarge mit anderem Stromstärkebereich auf die erfindungsgemässe Weise erzeugt werden. Da somit jeweils die Schweissstromstärke als Wert bekannt ist, die entlang der Nahtlänge aufgebracht worden ist, kann aus der Lage des korrekt geschweissten Bereichs auf der Testzarge die entsprechende Schweissstromstärke ermittelt werden, bzw. innerhalb des korrekt geschweissten Bereichs kann eine Stelle der Naht ausgewählt werden (z.B. eine Stelle, die den Bereich zwischen "Kleben" und "Spritzern" im Verhältnis 2/3 zu 1/3 teilt) und die an dieser Stelle wirksam gewesene Schweissstromstärke kann bestimmt, insbesondere aus der Rampe des Schweissstromverlaufs abgelesen oder aus dem Speicher ausgelesen werden. Diese Schweissstromstärke kann dann für die Serienproduktion als ermittelter Schweissstromwert für die Schweissung mit diesem konstanten Stromstärkewert verwendet werden.

Bei einer bevorzugten Ausführungsform erfolgt die Stromstärkevariation entlang der Naht der Testzarge nicht stetig sondern mit mindestens einem Knickpunkt und verschiedenen Steigungen beidseits des Knickpunktes. Dies erlaubt es bei der Testzarge im Bereich der grossen Schweissstromstärke mit einer geringeren Steigung der Stromstärkeänderung zu fahren und im Bereich der kleineren Schweissstromstärke mit einer steileren Steigung der Stromstärkeänderung. Dies ergibt eine bessere Erkennung der "Spritzergrenze" und eine gute Aufreissbarkeit der Naht im Bereich des "Klebens". Bevorzugt erfolgt die Schweissung anfänglich mit grosser Stromstärke und somit mit entlang der Naht fallender Schweissstromstärke.

### Kurze Beschreibung der Zeichnungen

Im Folgenden werden Ausführungsbeispiele der verschiedenen Aspekte der Erfindung anhand der Zeichnungen näher erläutert. Dabei zeigt
Figur 1 eine schematische Ansicht einer Schweissnaht einer Behälterzarge und des Verlaufs der Schweissstromstärke (z.B. in Ampere) über der Naht oder über die Zeit;
Figur 2 eine weitere schematische Darstellung einer Schweissnaht einer Behälterzarge und des Verlaufs der Schweissstromstärke zur Erläuterung eines bevorzugten Ausführungsbeispiels der Erfindung;
Figur 3 schematisch eine Schweissvorrichtung zur Widerstandsnahtschweissung von Behälterzargen gemäss der Erfindung; und
Figur 4 eine weitere schematische Darstellung einer Schweissnaht einer Behälterzarge und des Verlaufs der Schweissstromstärke zur Erläuterung der Erfindung.

### Wege zur Ausführung der Erfindung

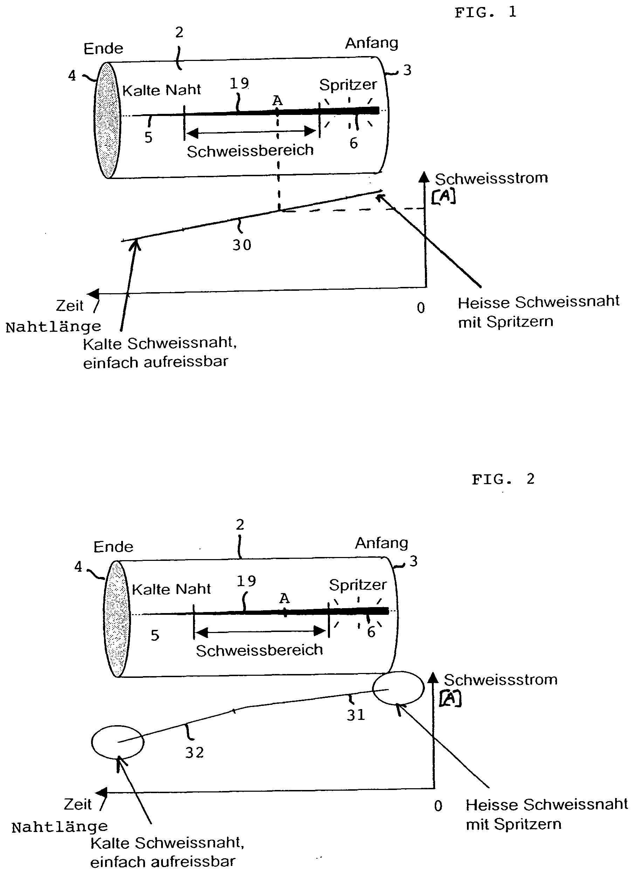

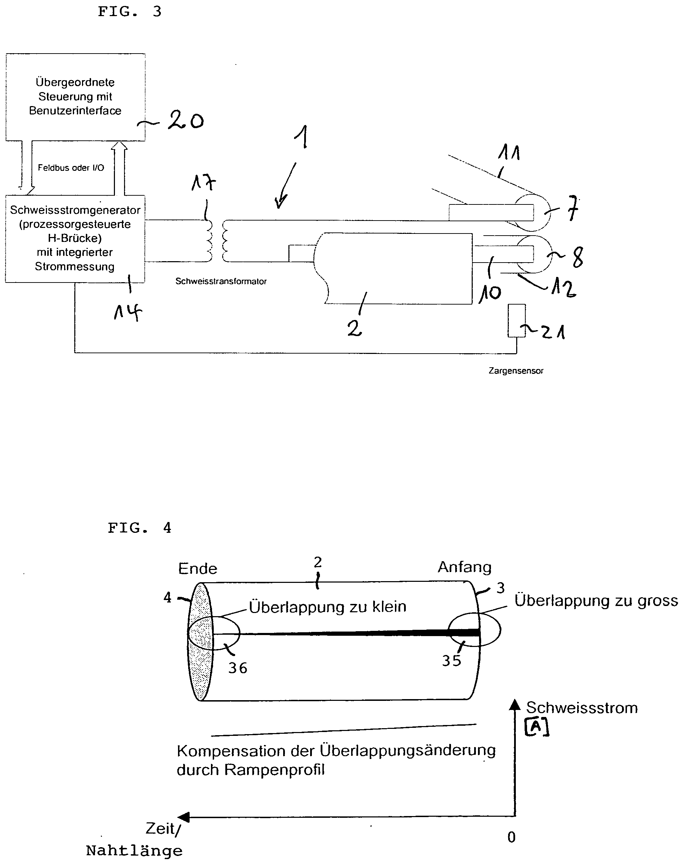

Figur 1 zeigt schematisch eine Testbehälterzarge 2, welche zur Ermittlung des geeigneten Schweissstromstärkewertes für die Serienproduktion von Zargen aus dem selben Blechmaterial wie die Testzarge dient, oberhalb eines Diagramms, welches die Schweissstromstärke entlang der Nahtlänge der Testzarge 2 oder entsprechend über der zu deren Schweissung benötigten Zeit darstellt. Die Testzarge 2 wird auf einer Widerstandsnahtschweissmaschine bzw. Rollnahtschweissmaschine geschweisst, wie dies anhand von Figur 3 noch näher erläutert wird. Gemäss der Erfindung wird nun die Stärke des Schweissstromes während der Testschweissung der Zarge 2 entlang der Überlappschweissnaht fallend oder ansteigend geändert. In dem gezeigten Beispiel fällt die Schweissstromstärke 30 während der Schweisszeit bzw. über die Nahtlänge ab und verringert sich somit von einem Anfangswert zu einem Schlusswert. Der Schweissstrom ist dabei auf bekannte Weise beim Behälterzargenschweissen ein Wechselstrom, in der Regel mit höherer Frequenz als der Netzspannungsfrequenz, was dem Fachmann bekannt ist und hier nicht weiter erläutert wird. Neu ist aber, dass bei der Schweissung der Testzarge die Stromstärke des in die Überlappungsnaht der Testzarge eingebrachten Schweissstroms geändert wird. Damit kann entlang der Schweissnaht der Testzarge 2 von deren Anfang 3 bis zu deren Ende 4 (auf die Transportrichtung der Zarge bezogen) eine Überlappungsschweissnaht erzeugt werden, bei welcher sowohl ein Bereich 6 mit zu hoher Schweisstemperatur und dem Auftreten von "Spritzern" gebildet wird, als auch ein Bereich 5 mit zu tiefer Schweisstemperatur, bei der eine kalte Schweissnaht bzw. eine sogenannte "klebende" Naht erzeugt wird, welche keine genügende Verschweissung ergibt. Zwischen diesen Bereichen 6 und 5 liegt dann durch die Änderung der Schweissstromstärke ein Schweissbereich 19, in welchem eine Verschweissung ohne Spritzer und mit genügender Schweisstemperatur erzeugt wird. Bei der gezeigten Darstellung wird die höhere Schweissstromstärke am Anfang der Zarge verwendet und der Schweissstrom 30 bzw. dessen Stärke fällt zum Ende der Naht bzw. zum Ende 4 der Zarge hin ab. Natürlich wäre auch ein umgekehrtes Vorgehen möglich, bei welchem mit einer geringen Schweissstromstärke am Anfang 3 der Zarge begonnen wird und die Schweissstromstärke entlang der Naht ansteigt. Dann würde sich der Bereich 5 am Anfang 3 der Zarge befinden und der Spritzerbereich 6 am Ende 4 der Zarge. Dazwischen würde wieder ein korrekter Schweissbereich 19 gebildet. Auf die erfindungsgemässe Weise kann somit eine Testzarge 2 gebildet werden, welche den gesamten Schweissstrombereich von zu hoher Schweissstromstärke bis zu zu geringer Schweissstromstärke auf die Naht der einen Testzarge 2 abbildet. Sollte die Bedienungsperson die Anfangseinstellung der Schweissstromstärke so falsch gewählt haben, dass diese Abbildung nicht gelingt, so ist gegebenenfalls eine weitere Testzarge mit einem tieferen oder höheren Anfangswert der Schweissstromstärke auszuführen, so dass im Diagramm des Stromstärkeverlaufs die Rampe parallel nach unten oder nach oben verschoben wäre. Allenfalls kann auch die Steigung der Schweissstromstärke 30 entlang der Nahtlänge bzw. über die Schweisszeit einstellbar sein, indes ist es bevorzugt, wenn eine vorgegebene Steigung der Rampe in der Steuerung eingegeben ist. Ist eine Testzarge 2 entsprechend Figur 1 mit den Nahtbereichen 6, 5 und 19 erzeugt worden, so kann aufgrund einer optischen bzw. visuellen Prüfung auf das Vorliegen von Spritzern die Grenze zwischen dem Bereich 6 und dem Bereich 19 bestimmt werden. Weiter kann auf bekannte Weise durch Aufreissen der Naht vom Ende 4 her der Bereich 5 bestimmt werden und dies kann allenfalls durch eine optische bzw. visuelle Betrachtung ergänzt werden. Damit wird die Grenze zwischen dem Bereich 5 und dem Bereich 19 festgelegt. Die Sollschweissstromstärke für die Produktion von Behälterzargen aus demselben Blechmaterial wie die Testzarge kann dann in den Schweissbereich 19 gelegt werden. Dies ist möglich, da bei der Erstellung der Testzarge die Schweissstromstärke 30 entlang der Nahtlänge bestimmt worden ist. Dies ist durch eine tatsächliche Messung der Schweissstromstärke entlang der Naht bei der Schweissung der Testzarge und die Speicherung der Messwerte möglich, so dass die bestimmte Schweissstromstärke der tatsächlichen Schweissstromstärke entspricht. Dies ist auch möglich, indem der in der Steuerung vorgegebene rampenförmige Soll-Verlauf der Schweissstromstärke der Naht oder Schweisszeit zugeordnet wird, so dass nicht ein Messwert sondern ein Vorgabewert für den Schweissstromgenerator bestimmt wird. Liegt also mit der Testzarge 2 der mögliche gute Schweissbereich 19 fest und wird eine Schweissung so gewünscht wie sie z.B. an der Stelle A des Bereiches 19 vorliegt, welche z.B. durch eine Drittelung der Länge des Bereiches 19 und die Festlegung des Punktes A bei einer Entfernung von einem Drittel von der Grenze zwischen den Bereichen 19 und 6 liegt, so steht mit dem Abstand des Punktes A von dem Zargenanfang bzw. dem Beginn der Schweissstromeinbringung auch fest, wie gross die Stromstärke bei der Schweissung an der Stelle A gewesen ist. Diese, wie gesagt durch Messung bestimmte oder an Hand der Sollvorgabe der Stromstärke entlang der Schweissnaht bestimmte, Schweissstromstärke an der Stelle A der Naht kann z. B. durch Eingabe der Nahtlänge vom Zargenanfang 3 bis zum Punkt A aus dem Messwertspeicher oder aus dem die Vorgabewerte der Rampe enthaltenden Speicher abgerufen werden, da gemäss der Erfindung die Stromstärkewerte entlang der Naht bestimmt sind. Es kann somit durch eine einfache Längenmessung mit einem Massstab die Länge vom Zargenanfang 3 bis zum Punkt A festgestellt und damit der für die Produktion geeignete Schweissstrom ermittelt werden. Dieser kann dann an der Schweissmaschine für die Serienproduktion eingestellt werden oder kann direkt aus dem Speicher entnommen werden, in welchem die Erfassung bei der Testschweissung erfolgt ist oder in welchem die Sollvorgabe entlang der Naht abgelegt ist. Da Nahtlänge und Zeit bei der vorgegebenen Schweissgeschwindigkeit der Schweissmaschine in einer festen Beziehung zueinander stehen, kann bei der Erfassung entweder die Schweisszeit erfasst werden oder es kann die Nahtlänge z.B. über den Drehwinkel der Schweissrollen während er Schweissung der Testzarge 2 bestimmt werden oder über die Länge einer dabei benutzten Drahtzwischenelektrode 11, 12 (Figur 3).

Bei einer bevorzugten Ausführungsform wird so vorgegangen, dass mit dem hohen Strom begonnen wird, wie dies in Figur 1 dargestellt ist. Ferner ist es bevorzugt, dass der Strom erst nach dem Zargenbeginn an die Schweissrollen angelegt wird, und zwar bevorzugterweise ca. 5-10 mm nach dem Zargenanfang 3, damit anfällige Einschwingbewegungen oder fehlerhafte Synchronisationseinstellungen die Messung des Schweissstromes nicht beeinflussen können. Die Schweissmaschine kann dazu mit einer Detektion des Zargenanfanges 3 ausgestattet sein, wie dies noch erläutert wird. Bevorzugt wird ferner der Schweissstrom kurz vor dem Ende 4 der Zarge 2 abgeschaltet. Dies erleichtert das Aufreissen der Naht bei der mechanischen Inspektion.

Figur 2 zeigt ein weiteres bevorzugtes Ausführungsbeispiel, wobei die vorstehenden Erläuterungen auch hier gelten. Gleiche Bezugszeichen bezeichnen auch wiederum gleiche Elemente. Bei dieser Ausführungsform wird nicht mit einem konstant abfallenden oder ansteigenden Strom 30 geschweisst, sondern mit einem Stromverlauf, welcher mindestens zwei verschiedene Steigungen und entsprechend einen Knickpunkt (wie dargestellt) oder mehrere Knickpunkt aufweist. In Figur 2 sind die beiden Abschnitte 31 und 32 des Stromstärkeverlaufs über die Nahtlänge bzw. Schweisszeit dargestellt. Im Bereich des höheren Stromes ist dabei die Steigung der abfallenden Rampe geringer und im Bereich des tieferen Stromes 32 ist die Steigung grösser. Dadurch kann erreicht werden, dass die Spritzergrenze zwischen den Bereichen 6 und 19 auf der Naht mit höherer Auflösung auf der Naht ersichtlich ist und die Naht am Ende 4 trotzdem gut aufgerissen werden kann, um den Bereich 5 festzulegen.

Figur 3 zeigt schematisch eine Widerstandsnahtschweissmaschine oder Rollnahtschweissmaschine 1, welche die beiden Schweissrollen 7 und 8 aufweist, zwischen denen die Naht der Zarge 2 auf bekannte Weise geschweisst wird. Auf den Schweissrollen können Drahtzwischenelektroden 11 bzw. 12 laufen. Die untere Schweissrolle 8 ist an einem Schweissarm 10 gelagert und wird über die Leitung 15 von dem Schweissstromgenerator 14 über den Schweisstransformator 17 gespiesen. Durch einen Sensor 21, insbesondere einen berührungslos arbeitenden Sensor oder auch durch eine in den Schweissstromgenerator integrierte Detektion, kann dieser erkennen, wenn die Zarge 2 zwischen die Schweissrollen gelangt ist. Der Schweissstromgenerator steuert dann das Anlegen des Schweissstromes über die Leitung 1 an die obere Schweissrolle 7. Damit kann insbesondere auch das verzögerte Anlegen des Schweissstromes in einem kleinen Abstand vom Zargenanfang gesteuert werden. Die Steuerung 20 kann ferner den Schweissstromgenerator 14 steuern und diesem den gewünschten rampenförmigen Verlauf des Schweissstromes aufprägen, der in diesem Fall in der Steuerung als Vorgabewert enthalten ist. Der rampenförmige Verlauf kann aber auch im Schweissstromgenerator selber abgelegt und durch ein externes Signal für die Testzargenschweissung aktivierbar sein. Ein prozessorgesteuerter Schweissstromgenerator, der ein erfindungsgemässes Vorgehen ermöglicht, ist ein Schweissstromgenerator vom Pulsar oder Unisoud der Firma Soudronic, Bergdietikon, Schweiz. Die Steuerung erfasst ferner die Schweisszeit für die Testzarge oder die geschweisste Nahtlänge, wie dies bereits erläutert worden ist. Die Steuerung 20 kann ferner auch die über die Zeit bzw. die Nahtlänge an die Schweissrollen abgegebene Stromstärke ermitteln, sei dies durch Messung oder durch Vergleich der Schweisszeit bzw. Schweissnahtlänge mit dem Stromstärkesollwert entsprechend der Rampe. In Figur 3 ist als Variante dargestellt, dass die Leitungen von der Steuerung 20 zum Generator 14 auch in Gegenrichtung ein Stromstärkeausgangssignal des Generators an die Steuerung 20 liefern können. Alternativ kann eine separate Stromstärkemesseinrichtung 26 vorgesehen sein, welche die Stärke des Schweissstromes an die Steuerung liefert, womit diese erfasst und der Schweisszeit oder der Nahtlänge zugeordnet wird. Alternativ wird anstelle der Messung mit der Sollwertrampe in der Steuerung oder dem Generator für die Testzargenschweissstromstärke gearbeitet. Durch Ermittlung eines bevorzugten Ortes A im korrekten Schweissbereich 19 auf der Schweissnaht der Testzarge 2 kann diesem dann, wie erläutert, die entsprechende Schweissstromstärke gemäss den Rampen 30 oder 31, 32 zugeordnet werden, die gemessene Rampen oder vorgegebene Stromstärkesollwertrampen sind. Dieser eine Stromstärkewert wird dann von der Steuerung 20 als Schweissstromsollwert für die Schweissung der Produktionsserie von Behälterzargen verwendet. Dabei wird dann auf bekannte Weise mit konstantem, nicht abfallendem bzw. nicht ansteigendem Schweissstrom mit der ermittelten Schweissstromstärke geschweisst. Damit liegen die Produktionsschweissnähte im optimalen Bereich entsprechend dem Punkt A auf der Schweissnaht der Testzarge.

Anhand der Figuren 3 und 4 wird das Vorgehen bei der Zargenproduktion erläutert, welches anhand von Figur 4 als Verfahren erläutert wird und mit der Schweissvorrichtung von Figur 3 ausgeführt werden kann. Es kann sich ergeben, dass bei der Produktion der Zargenrohlinge (durch Zuschnitt der Bleche und bei der Rundung zum Zargenrohling) die Überlappung der sich überlappenden Randbereiche der Dosenzarge entlang der zu bildenden Schweissnaht nicht gleichmässig verläuft. In der Figur 4 ist eine entsprechende Zarge schematisch dargestellt, wobei am Zargenanfang 3 mindestens im Bereich 35 die Überlappung zu gross ist und am Zargenende 4 mindestens im Bereich 36 die Überlappung zu klein ist. Auf herkömmliche Weise lassen sich solche Dosenzargen kaum mit genügender Qualität schweissen, da die konstante Produktionsschweissstromstärke in die grosse Überlappung in der Regel zuwenig Energie einbringen kann, so dass sich dort eine zu kalte Schweissung ergibt, und andererseits die konstante Schweissstromstärke in die zu kleine Überlappung zuviel Energie einbringt, so dass sich dort der Effekt von einer Schweissung mit zu grosser Temperatur und Spritzern zeigt. Gemäss der Erfindung wird nun so vorgegangen, dass die Schweissung in der Produktion mit einer entsprechend abfallenden Schweissstromstärke erfolgt, wie dies in Figur 4 unterhalb der Zarge dargestellt ist, wobei wiederum auf der vertikalen Achse die Schweissstromstärke dargestellt ist und auf der horizontalen Achse die Schweisszeit oder die Nahtlänge. Würde der Überlappungsfehler der Dosenzarge 2 anders verlaufen, so dass am Anfang 3 eine zu geringe Überlappung vorhanden wäre und am Ende 4 eine zu grosse Überlappung, so müsste die Schweissstromstärke entsprechend ansteigend verlaufen, anstatt, wie in Figur 4 gezeigt, abfallend. Die Schweissmaschine von Figur 3 ist mit der Steuerung 20 und dem Schweissstromgenerator 14 (der wiederum z.B. ein Schweissstromgenerator des Typs Pulsar oder Unisoud der Firma Soudronic AG, Bergdietikon, Schweiz, ist) entsprechend der Erfindung ausgestaltet, so dass sie in der Serienproduktion für jede Zarge der rasch aufeinander folgenden Zargen eine entsprechend abfallende oder ansteigende Schweissstromstärke über die jeweilige Naht erzeugt.

Zur Ermittlung der gewünschten Schweissstromstärke am Anfang und am Ende der Naht wird das anhand der Figuren 1 bis 3 erläuterte Verfahren zur Schweissung der Testzarge gemäss der Erfindung verwendet. Dabei wird mit diesem erläuterten Verfahren, das auf zwei oder mehrere Zargen angewendet wird für den Zargenanfang und das Zargenende mit der nicht übereinstimmenden Überlappungsbreite ein jeweils anderer optimaler Strom ermittelt. Diese beiden Stromwerte für den Anfang und das Ende der Schweissnaht werden dann in der Serienproduktion der Zargen mit dem in Figur 4 dargestellten Schweissstromrampenprofil gefahren, womit die Überlappungsabweichung kompensiert werden kann. Die optimalen Schweissströme für den Zargenanfang und das Zargenende können aber auch auf herkömmliche Weise durch das Schweissen von Zargentestserien mit verschiedenen konstanten Schweissströmen ermittelt werden.

Zur Ermittlung der Schweissstromstärke für die Widerstandsnahtschweissung der Überlappnaht von Behälterzargen wird somit gemäss der Erfindung bei einer Testzarge eine Schweissung mit sich ändernder Schweissstromstärke durchgeführt, die bei der Testzarge eine sich ändernde Verschweissung der Naht ergibt, die von der Schweissung mit zu hoher Temperatur bis zur Schweissung mit zu tiefer Temperatur bei dieser Naht reicht. Dabei wird die Schweissstromstärke für die Bildung der Schweissung erfasst (durch Messung oder aus der Vorgabe), so dass erfasst ist, an welcher Stelle der Naht mit welcher Stärke des Schweissstromes geschweisst wird. Mittels einer mechanischen und/oder optischen Prüfung der Schweissnaht kann dann einfach festgestellt werden, wo die Naht eine korrekte, für die Serienproduktion von Behälterzargen aus demselben Blechmaterial wie die Testzarge geeignete Verschweissung aufweist. Ist eine solche Stelle oder ein solcher Bereich der Naht bekannt, so kann die dabei bei der Testschweissung erfasste Schweissstromstärke für die Serienproduktion mit der Schweissung mit konstanter Schweissstromstärke übernommen werden.

Auch eine Bedienungsperson der Widerstandsnahtschweissmaschine mit wenig Erfahrung in der Schweisstechnik kann mit der Erfindung ohne besonderes Wissen über die Systemeigenschaften (z.B. Produktionsgeschwindigkeit, Schweissdruck) und die Beschaffenheit des zu verarbeitenden Blechmaterials in kurzer Zeit eine qualitative Aussage darüber machen, wo der Schweissbereich für die Produktionsserie liegt (minimale, maximale und optimale Schweissstromstärke). Da für die Ermittlung nur ein bis zwei Testzargen benötigt werden, erfordert das erfindungsgemässe Vorgehen deutlich weniger Zeit und Material als das herkömmliche Vorgehen.

Gemäss der Erfindung erfolgt bei der Serienproduktion das Schweissen einer Serie von Behälterzargen mit einem fallenden oder steigenden Schweissstromstärkeverlauf bei jeder Zarge, wobei es sich um Zargen mit einer ungleichmässig verlaufenden Überlappung der Zargenränder handelt. Dies erlaubt das Schweissen solcher Zargen mit guter Schweissqualität, was auf herkömmliche Weise mit konstanter Schweissstromstärke nicht möglich ist.

## Patentansprüche

1. Verfahren zur Ermittlung des anzuwendenden Schweissstromes für das Widerstandsnahtschweissen von Überlappnähten aufeinander folgender Behälterzargen, welche eine Überlappungsbreite aufweisen, die sich entlang der Naht ändert, wobei mindestens eine Testzarge mit während der Schweissung von deren Naht fallender oder steigender Schweissstromstärke geschweisst wird, wobei die Schweissstromstärke bei der grösseren Überlappungsbreite grösser und bei der kleineren Überlappungsbreite kleiner gewählt wird und wobei erfasst wird, wo auf der Naht welche Schweissstromstärke aufgebracht wird und wobei durch mechanische und/oder optische Prüfung der Testzarge ein fallender oder steigender Verlauf des Schweissstroms ermittelt wird, der sowohl bei der grösseren Überlappungsbreite als auch bei der kleineren Überlappungsbreite eine korrekte Schweissung der Naht ergibt.

2. Verfahren nach Anspruch 1, **dadurch gekennzeichnet, dass** die Schweissstromstärke über die Schweissdauer für die Naht erfasst wird.

3. Verfahren nach Anspruch 1, **dadurch gekennzeichnet, dass** die Schweissstromstärke über die Nahtlänge erfasst wird, insbesondere über den Drehwinkel mindestens einer Schweissrolle (7, 8) oder über die Länge einer zur Schweissung verwendeten Drahtzwischenelektrode (11, 12).

4. Verfahren nach einem der Ansprüche 1 bis 3, **dadurch gekennzeichnet, dass** die Schweissstromstärke über die Nahtlänge im Wesentlichen linear abfallend oder ansteigend gewählt wird.

5. Verfahren nach einem der Ansprüche 1 bis 4, **dadurch gekennzeichnet, dass** die Schweissstromstärke mindestens zwei Bereiche (31, 32) mit unterschiedlicher Steigung des Abfallens oder Ansteigens aufweist.

6. Verfahren nach einem der Ansprüche 1 bis 5, **dadurch gekennzeichnet, dass** der Schweissstrom erst in einem vorbestimmten Abstand vom Zargenanfang (3) angelegt wird.

7. Verfahren nach einem der Ansprüche 1 bis 6, **dadurch gekennzeichnet, dass** auf der Nahtlänge einer Testzarge (2), insbesondere aber zweier oder mehr Testzargen, ein Schweissstrom aufgebracht wird, dessen Schweissstromstärke im Bereich von einer für die Naht der Testzargen zu hohen Schweissstromstärke bis zu einer für die Naht der Testzargen zu tiefen Schweissstromstärke liegt.

8. Verfahren nach einem der Ansprüche 1 bis 7, **dadurch gekennzeichnet, dass** die Schweissstromstärke für die Produktion ausgewählt wird, indem für eine gegenüber einem Normwert zu geringe Überlappung und eine zu grosse Überlappung jeweils eine korrekt geschweisste Stelle (A) auf der Testzarge oder den Testzargen (2) durch mechanische und/oder optische, insbesondere visuelle, Prüfung der Testzarge ermittelt wird, und dass die der Lage dieser Stellen (A) auf der Schweissnaht entsprechende erfasste Schweissstromstärken ermittelt werden, und dass der abfallende oder ansteigende Produktionsschweissstromstärkenverlauf für jede Zarge als ein die beiden erfassten Stromstärken verbindender im Wesentlichen gerade verlaufende Stromstärkenverlauf gebildet wird.

9. Verfahren zur Widerstandsnahtschweissung einer Produktionsserie von aufeinander folgenden Behälterzargen, welche jeweils eine Überlappungsbreite im Schweissnahtbereich aufweisen, die sich entlang der Naht im Wesentlichen stetig ändert, **dadurch gekennzeichnet, dass** die anzuwendende Schweissstromstärke mittels des Verfahrens nach einem der Ansprüche 1 bis 8 ermittelt wird, und dass jede Zarge mit der derart ermittelten, entlang ihrer Naht fallenden oder steigenden Schweissstromstärke geschweisst wird, wobei die Schweissstromstärke bei der grösseren Überlappungsbreite grösser ist als bei der kleineren Überlappungsbreite.

10. Schweissvorrichtung (1) für die Widerstandsnahtschweissung von Behälterzargen (2) zur Durchführung des Verfahrens nach Anspruch 1, umfassend Schweissrollen (7, 8), einen Schweissstromgenerator (14) und eine Schweissstromsteuerung (20), wobei durch die Schweissstromsteuerung und den Schweissstromgenerator die Schweissstromstärke während der Schweissung einer Behälterzarge oder mehrerer Behälterzargen entsprechend einer Vorgabe im Wesentlichen stetig fallend oder steigend erzeugbar und während der Schweissung erfassbar ist, **dadurch gekennzeichnet, dass** der Schweissstrom mit einer vorbestimmten Verzögerung nach dem Eintritt der Zarge zwischen die Schweissrollen an diese anlegbar ist.

11. Schweissvorrichtung nach Anspruch 10, **dadurch gekennzeichnet, dass** die Schweissstromstärke über die Schweissdauer erfassbar ist.

12. Schweissvorrichtung nach Anspruch 10, **dadurch gekennzeichnet, dass** die Schweissstromstärke über die Nahtlänge erfassbar ist, insbesondere über den Drehwinkel mindestens einer der Schweissrollen oder über die benutzte Länge einer zur Schweissung verwendeten Drahtzwischenelektrode (11, 12).

13. Schweissvorrichtung nach einem der Ansprüche 10 bis 12, **dadurch gekennzeichnet, dass** der Schweissstrom mit linear abfallender oder ansteigender Stromstärke erzeugbar ist.

14. Schweissvorrichtung nach einem der Ansprüche 10 bis 13, **dadurch gekennzeichnet, dass** der Schweissstrom entlang der Naht einer Zarge mit mindestens zwei Stromstärkebereichen (31, 32) mit unterschiedlicher Steigung des Abfallens oder Ansteigens der Stromstärke erzeugbar ist.

## Claims

1. Method for determining the welding current to be applied for the resistance seam welding of overlapping seams of consecutive container frames, having an overlapping width which changes along the seam, wherein at least a test frame is welded with a welding current strength which decreases or increases during welding of its seam, wherein the welding current strength is chosen to be higher in case of the larger overlapping width and is chosen to be smaller in case of a smaller overlapping width and wherein it is determined which welding current strength is applied where on the seam and wherein a decreasing or increasing course of the welding current is determined by mechanical and/or optical verification of the test frame, such that the welding current yields a correct welding of the seam for the larger overlapping width as well as also for the smaller overlapping width.

2. Method according to claim 1, **characterized in that** the welding current strength is determined by the welding duration for the seam.

3. Method according to claim 1, **characterized in that** the welding current strength is determined by the seam length, particularly by the rotation angle of at least one welding roller (7, 8) or by the length of an intermediary wire electrode (11, 12) used for welding.

4. Method according to one of the claims 1 to 3, **characterized in that** the welding current strength is chosen substantially linearly decreasing or increasing along the seam length.

5. Method according to one of the claims 1 to 4, **characterized in that** the welding current strength has at least two areas (31, 32) with different slope of the decrease or increase.

6. Method according to one of the claims 1 to 5, **characterized in that** the welding current is applied only at a predefined distance from the beginning of the frame (3).

7. Method according to one of the claims 1 to 6, **characterized in that** a welding current is applied on the seam length of a test frame (2), however particularly of two or more test frames, the welding current strength of which is in the range of a too high welding current strength for the seam of the test frames up to a too low welding current strength for the seam of the test frames.

8. Method according to one of the claims 1 to 7, **characterized in that** the welding current strength for the production is chosen such that a correctly welded location (A) on the test frame or test frames (2) is determined for a too small overlapping and a too large overlapping with respect to a standard value by mechanical and/or optical, particularly visual, verification of the test frame, and **in that** captured welding current strengths corresponding to the position of these locations (A) on the welding seam are determined, and **in that** the course of the decreasing or increasing production welding current strength is formed for each frame as a substantially straight course of the current strength connecting the two captured current strengths.

9. Method for resistance seam welding of a production series of consecutive container frames each having an overlapping width in the welding seam area, which changes substantially continuously along the seam, **characterized in that** the welding current strength to be applied is determined by the method according to one of the claims 1 to 8, and **in that** each frame is welded along its seam with the decreasing or increasing welding current strength determined in this way, wherein the welding current strength is greater in case of the larger overlapping width than in case of the smaller overlapping width.

10. Welding device (1) for the resistance seam welding of container frames (2) for carrying out the method according to claim 1, comprising welding rollers (7, 8), a welding current generator (14) and a welding current controller (20), wherein the welding current strength is generated according to a prescription in a continuously decreasing or increasing way during the welding of a container frame or of multiple container frames and is detectable during welding by means of the welding current controller and the welding current generator, **characterized in that** the welding current is applied to the welding rollers with a predefined delay after introduction of the frame between the same.

11. Welding device according to claim 10, **characterized in that** the welding current strength is detectable by means of the welding duration.

12. Welding device according to claim 10, **characterized in that** the welding current strength is detectable by means of the seam length, particularly by means of the rotation angle of at least one of the welding rollers or by means of the used length of an intermediary wire electrode (11, 12) used for welding.

13. Welding device according to one of the claims 10 to 12, **characterized in that** the welding current is generated with a linearly decreasing or increasing current strength.

14. Welding device according to one of the claims 10 to 13, **characterized in that** the welding current is generated along the seam of a frame with at least two ranges of current strengths (31, 32) with different slope of decrease or increase of the current strength.

## Revendications

1. Procédé pour déterminer le courant de soudage à appliquer pour le soudage à résistance de coutures chevauchées de corps de boîte consécutifs, ayant une largeur de chevauchement qui change le long de la couture, au moins un corps de boîte de test étant soudé avec une puissance du courant de soudage qui décroît ou augmente pendant le soudage de sa couture, la puissance du courant de soudage étant choisie plus élevée en cas d'une plus grande largeur de chevauchement et étant choisie plus petite en cas d'une plus petite largeur de chevauchement et il est déterminé quelle puissance du courant de soudage est appliquée où sur la couture et une évolution décroissante ou augmentante du courant de soudage étant déterminée par une vérification mécanique et/ou optique du corps de boîte de test, de sorte que le courant de soudage donne une valeur correcte de la couture pour la plus grande largeur de chevauchement ainsi que pour la plus petite largeur de chevauchement.

2. Procédé selon la revendication 1, **caractérisé en ce que** la puissance du courant de soudage est déterminée par la durée du soudage de la couture.

3. Procédé selon la revendication 1, **caractérisé en ce que** la puissance du courant de soudage est déterminée par la longueur de couture, particulièrement par l'angle de rotation d'au moins un rouleau de soudage (7, 8) ou par la longueur d'un fil-électrode intermédiaire (11, 12) utilisé pour le soudage.

4. Procédé selon l'une des revendications 1 à 3, **caractérisé en ce que** la puissance du courant de soudage est choisie essentiellement de manière qu'elle décroît ou augmente linéairement le long de la couture.

5. Procédé selon l'une des revendications 1 à 4, **caractérisé en ce que** la puissance du courant de soudage a au moins deux régions (31, 32) avec des pentes différentes de décroissance ou augmentation.

6. Procédé selon l'une des revendications 1 à 5, **caractérisé en ce que** le courant de soudage est appliqué seulement à une distance prédéfinie du début du corps de boîte (3).

7. Procédé selon l'une des revendications 1 à 6, **caractérisé en ce qu'**un courant de soudage est appliqué sur la longueur de couture d'un corps de boîte de test (2), particulièrement de deux ou plusieurs corps de boîte de test, la puissance du courant de soudage duquel est dans la gamme d'une puissance du courant de soudage trop élevée pour la couture du corps de boîte de test jusqu'à une puissance du courant de soudage trop faible pour la couture du corps de boîte de test.

8. Procédé selon l'une des revendications 1 à 7, **caractérisé en ce que** la puissance du courant de soudage pour la production est choisie de sorte qu'un lieu (A) sur le corps de boîte de test ou les corps de boîte de test (2), qui est soudé correctement, est déterminé pour un trop petit chevauchement et un trop grand chevauchement par rapport à une valeur standard par une vérification mécanique et/ou optique, particulièrement visuelle, du corps de boîte de test, et **en ce que** des puissances du courant de soudage qui correspondent à la position de ces lieux (A) sur la couture de soudage sont déterminées, et **en ce que** l'évolution de la puissance du courant de soudage de production qui décroît ou augmente est formée pour chaque corps de boîte en tant qu'une évolution essentiellement linéaire de la puissance du courant de soudage qui connecte les deux puissances de courant capturées.

9. Procédé de soudage par résistance d'une série de production de corps de boîte consécutifs qui ont tous une largeur de chevauchement, dans la région de la couture de soudage, qui change essentiellement de manière continue le long de la couture, **caractérisé en ce que** la puissance du courant de soudage à appliquer est déterminée par le procédé selon l'une des revendications 1 à 8, et **en ce que** chaque corps de boîte est soudé de cette manière le long de sa couture avec la puissance du courant de soudage qui décroît ou augmente, la puissance du courant de soudage étant supérieure en cas du chevauchement plus large qu'en cas du chevauchement plus petit.

10. Dispositif de soudage (1) pour le soudage par résistance de corps de boîte (2) pour exécuter le procédé selon la revendication 1, comprenant des rouleaux de soudage (7, 8), un générateur de courant de soudage (14) et une commande de curant de soudage (20), la puissance du courant de soudage étant générée selon une prescription de manière décroissante ou augmentante continûment pendant le soudage d'un corps de boîte ou des multiples corps de boîte et étant détectable pendant le soudage à l'aide de la commande de courant de soudage et du générateur de courant de soudage, **caractérisé en ce que** le courant de soudage est appliqué aux rouleaux de soudage avec un délai prédéfini après l'introduction du corps de boîte entre les rouleaux.

11. Dispositif de soudage selon la revendication 10, **caractérisé en ce que** la puissance du courant de soudage est détectable à l'aide de la durée du soudage.

12. Dispositif de soudage selon la revendication 10, **caractérisé en ce que** la puissance du courant de soudage est détectable à l'aide de la longueur de la couture, particulièrement à l'aide de l'angle de rotation d'au moins un des rouleaux de soudage ou à l'aide de la longueur utilisée d'un fil-électrode intermédiaire (11, 12) utilisé pour le soudage.

13. Dispositif de soudage selon l'une des revendications 10 à 12, **caractérisé en ce que** le courant de soudage est généré avec une puissance du courant de soudage qui décroît ou augmente linéairement.

14. Dispositif de soudage selon l'une des revendications 10 à 13, **caractérisé en ce que** le courant de soudage est généré le long de la couture d'un corps de boîte avec au moins deux gammes de puissances de courant (31, 32) avec des différentes pentes de décroissance ou augmentation de la puissance de courant.
